# EUROPÄISCHE PATENTANMELDUNG

(11) **EP 2 213 961 A2**
(43) Veröffentlichungstag der Anmeldung: **04.08.2010**
(21) Anmeldenummer: 10000864.8
(22) Anmeldetag: 28.01.2010
(51) Int. Cl.: F24J 2/52, H01L 31/042

(54) **Vorrichtung zur Aufständerung von Solarmodulen**

(30) Priorität: 28.01.2009 DE 202009001072 U
(71) Anmelder: Ralos Vertriebs GmbH, 64720 Michelstadt (DE)
(72) Erfinder: Schölzl, Günter, 78727 Oberndorf (DE)
(74) Vertreter: Maser, Jochen

(57) **Zusammenfassung**

Die Erfindung betrifft eine Vorrichtung zur Aufständerung von Solarmodulen (42), welche zumindest zwei Querträger (19) aufweist, die zumindest zwei Längsträger (16) aufnehmen und einen Tragrahmen (37) für das zumindest eine Solarmodul (42) bilden, und mit zumindest einer den Tragrahmen (37) aufnehmenden Stützeinrichtung (12), wobei die zumindest eine Stützeinrichtung (12) aus wenigstens einem Träger (21, 22) besteht, die an dem zumindest einen Querträger (19) angreift und zumindest ein Lastabtragspunkt des zumindest einen Trägers (21, 22) an einem Auflager (14) befestigt ist.

## Beschreibung

Die Erfindung betrifft eine Vorrichtung zur Aufständerung von Solarmodulen, welche zumindest zwei Querträger aufweist, die zumindest zwei Längsträger aufnehmen und zu einem Tragrahmen zur Aufnahme der Solarmodule verbindbar sind und welche zumindest eine den Tragrahmen aufnehmende Stützeinrichtung umfasst.

Aus der DE 20 2007 012 570 U1 ist eine gattungsgemäße Aufständerung von Solarmodulen beziehungsweise eine Unterkonstruktion für Solarfreiflächenanlagen bekannt geworden, welche einen Tragrahmen für Solarmodule aus Längs- und Querträgern, die miteinander verbunden sind, aufweist. Eine Stützeinrichtung nimmt die Tragrahmen auf, wobei die Stützeinrichtung aus einem senkrecht stehenden Pfosten besteht, von denen jeweils einer in einem mittleren Abschnitt an dem Querträger angreift und diesen Querträger in einer Winkelposition zum senkrecht stehenden Pfosten aufnimmt. Dadurch können die einzelnen auf dem Tragrahmen aufgebrachten Solarmodule in einer zur Sonnenposition geneigten Anordnung aufgenommen werden. Eine solche Anordnung weist den Nachteil auf, dass die Anbindung des vertikal stehenden Pfostens zum geneigten Querträger beziehungsweise Tragrahmen eine konstruktiv aufwändige Schweißkonstruktion darstellt, um auftretende Windlasten aufzunehmen. Darüber hinaus weist eine solche Konstruktion den Nachteil auf, dass diese bei auftretenden Windlasten leicht in Schwingungen versetzt werden, da die Befestigungspunkte zwischen den Querträgern und dem Pfosten als Schwenkachse des Tragrahmens wirken.

Aus der DE 20 2008 003 148 U1 geht des Weiteren eine Vorrichtung zur Aufständerung von Solarmodulen hervor, welche mehrere Solarmodule in geneigter Lage und beabstandet zu einem Untergrund aufnimmt und ebenfalls eine Solarfreiflächenanlage bildet. Dabei sind an den Stützeinrichtungen Bodendübel vorgesehen, die in den Boden eingebracht werden. Anschließend werden die Stützeinrichtungen mit mehreren Längsträgern verbunden. Die Stützeinrichtung besteht aus mehreren einzelnen Trägern, die miteinander verschraubt sind. Zwei vertikale Träger sind mit einem Querträger verbunden. Zwischen den beiden vertikalen Trägern ist beabstandet zum Querträger ein Verbindungsträger vorgesehen. Zur Aussteifung des dadurch gebildeten umlaufenden Rahmens der Stützeinrichtung sind Versteifungsträger eingesetzt, die an dem Querträger einerseits und jeweils gegenüberliegend an jeweils einem vertikalen zwischen den beiden Verbindungsträgern und dem Träger gebildeten Knotenpunkt befestigt sind. Dabei ist vorgesehen, dass es sich bei dieser Stützeinrichtung um eine Schraubkonstruktion handelt, bei der alle Träger durch Schraubverbindungen miteinander befestigt sind. Diese Aufständerung weist den Nachteil auf, dass erhebliche Herstellungskosten zum Einbringen der Bohrlöcher in die Träger für die Schraubverbindungen anfallen. Darüber hinaus ist die Montage zeitaufwändig. Des Weiteren sind die Verschraubungen entsprechend verstärkt auszubilden, um eine hinreichende Steifigkeit zu erzielen.

Der Erfindung liegt deshalb die Aufgabe zugrunde, eine Vorrichtung zur Aufständerung von Solarmodulen für Solarfreiflächenanlagen zu schaffen, welche eine stabile und sichere Anordnung der Stützeinrichtung zum Untergrund sowie eine schnelle und einfache Montage vor Ort ermöglicht.

Diese Aufgabe wird erfindungsgemäß dadurch gelöst, dass die Stützeinrichtung aus wenigstens einem Träger besteht, der an dem zumindest einen Querträger des Tragrahmens angreift und dass zumindest ein Lastabtragpunkt des wenigstens einen Trägers an zumindest einem Auflager befestigt ist.

Diese Anordnung weist den Vorteil auf, dass die zumindest eine Stützeinrichtung sowie das zumindest eine Auflager getrennt zur Mortagestelle zugeführt werden können, und dass nach dem Anordnen der Auflager auf dem Untergrund oder zumindest teilweise in den Untergrund der Freiflächenanlage in einfacher Weise die zumindest eine Stützeinrichtung auf dem Auflager montierbar ist. Dadurch kann auch die Stützeinrichtung in der Konstruktion vereinfacht ausgebildet sein, da die Stützeinrichtung nach der Befestigung an dem Auflager zusätzlich versteift wird.

Nach einer bevorzugten Ausgestaltung der Erfindung ist vorgesehen, dass zumindest zwei Träger an einem Querträger einerseits und an dem Auflager andererseits befestigt sind, wobei jeweils zumindest ein Lastabtragspunkt der Träger an zumindest einem gemeinsamen Auflager befestigt sind. Durch die Positionierung des jeweils zumindest einen Lastabtragspunktes des jeweiligen Trägers, der zumindest an einem Querträger der Stützeinrichtung angreift, wird durch den Querträger, die zumindest beiden Träger und das Auflager ein geschlossener Rahmen erzielt, wodurch eine stabile und steife Anordnung gebildet ist. Insbesondere ist eine Verwindungssteifheit gegeben. Des Weiteren kann dadurch eine Materialeinsparung erzielt werden, da die Ausgestaltung der Stützeinrichtung vor der Montage als geschlossener Rahmen nicht erforderlich ist. Vielmehr erfolgt der geschlossene Rahmen durch die Einbindung des Auflagers zur Stützeinrichtung.

Nach einer weiteren bevorzugten Ausgestaltung der Erfindung ist vorgesehen, dass die zumindest zwei Träger, welche die Stützvorrichtung bilden, vertikal ausgerichtet sind. Dadurch kann eine einfache Konstruktion mit einem sicheren Lastabtrag erfolgen, so dass die Solarmodule und die daran angreifenden Windlasten sicher und schwingungsfrei aufgenommen werden können.

Nach einer weiteren bevorzugten Ausgestaltung der Erfindung ist vorgesehen, dass das Auflager durch zumindest eine Schienenschwelle ausgebildet ist, welche auf dem Untergrund aufliegt oder zumindest teilweise in den Untergrund eingebracht ist. Diese Schienenschwellen ermöglichen ein einfaches Verlegen vor Ort mittels eines Kranwagens. Die Schienenschwellen können vorteilhafterweise sowohl aus Holz als auch aus Beton ausgebildet sein. Durch den Einsatz von solchen Schienenschwellen ist eine kostengünstige Bildung eines Fundamentes für die Solarfreiflächenanlage gegeben.

Nach einer alternativen Ausgestaltung der Erfindung ist vorgesehen, dass das Auflager durch zumindest ein Streifenfundament aus Beton im oder auf dem Untergrund ausgebildet ist. Solche Streifenfundamente ermöglichen ebenfalls eine stabile Aufnahme und steife Anordnung der Stützeinrichtungen.

Nach einer weiteren bevorzugten Ausgestaltung der Erfindung ist vorgesehen, dass das zumindest eine Auflager Befestigungselemente zum lösbaren Verbinden der Stützeinrichtung aufweist. Dadurch wird eine schnelle und einfache Montage vor Ort ermöglicht. Beispielsweise können Schraub- oder Klemmverbindungen vorgesehen sein, um den beziehungsweise die Träger der zumindest einen Stützeinrichtung zum zumindest einen Auflager zu fixieren.

Nach einer bevorzugten Ausgestaltung der Erfindung ist an den jeweiligen Lastabtragpunkten des Trägers ein Montageelement vorgesehen, welches an dem zumindest einen, vorzugsweise an zwei, benachbarten Auflagern befestigt ist. Durch solche Montageelemente können standardisierte Verbindungskomponenten eingesetzt werden. Insbesondere können herkömmliche Schienenschwellen verwendet werden, wobei die Montageelemente derart angepasst sind, dass diese auf die an den Schienenschwellen bereits vorhandenen Schraub-Klemm-Verbindungen befestigbar sind.

Ein solches Montageelement ist bevorzugt als Montageplatte oder Montagewinkel ausgebildet und ermöglicht eine größere Aufstandsfläche und bessere Verteilung der Last in das bzw. die zwei oder mehreren benachbarten Auflager. Bevorzugt sind zwei Auflager bzw. zwei Schienenschwellen eng benachbart zueinander angeordnet, auf denen ein Montageelement zur Aufnahme des jeweiligen einen Lastabtragspunkts der Träger befestigt ist. Dadurch kann eine breitere Aufstandsfläche für die Stützeinrichtung durch die zumindest zwei Schienenschwellen geschaffen und somit eine kippungsfreiere Anordnung der Stützeinrichtung ermöglicht werden.

Nach einer bevorzugten Ausgestaltung der Erfindung ist vorgesehen, dass nach dem Auslegen und Ausrichten der als Schienenschwellen ausgebildeten Auflager auf oder zumindest teilweise in dem Untergrund jeweils eine Stützeinrichtung auf dem zumindest einen Auflager durch eine vorzugsweise lösbare Befestigung anordenbar ist. Durch die Bereitstellung der Stützeinrichtung als vorgefertigte Einheit oder als Montagemodul für die Aufständerung von Solarmodulen wird eine einfache erste Teilmontage der erfindungsgemäßen Vorrichtung ermöglicht. Durch die bevorzugte Ausgestaltung der Stützeinrichtung als Schweißkonstruktion wird die Stützeinrichtung komplettiert angeliefert, und es bedarf lediglich der Befestigung, insbesondere der Verschraubung mit dem zumindest einen Auflager.

Nach einer weiteren bevorzugten Ausgestaltung der Erfindung ist vorgesehen, dass zumindest die zwei zueinander angeordneten Stützeinrichtungen durch Längsträger miteinander verbindbar sind. Dadurch kann eine Ausrichtung und erste Aussteifung der benachbarten Stützeinrichtungen zueinander erfolgen, wobei zumindest vorgesehen ist, dass ein oberer und unterer Längsträger an der Stützeinrichtung, insbesondere am jeweiligen Ende des Querträgers der Stützeinrichtung, angreift, um einen geschlossenen Tragrahmen für die Solarmodule auszubilden.

Des Weiteren sind bevorzugt zur einfachen Montage der Längsträger am ersten und dritten Knotenpunkt der Stützeinrichtung Montagewinkel vorgesehen, an denen die Längsträger anliegen bzw. aufliegen und vorzugsweise durch eine Schweißverbindung oder lösbare Verbindung daran befestigt sind. Durch diese Montagewinkel kann zunächst eine lose Vorfixierung und Positionierung der Längsträger zu der Stützeinrichtung erfolgen, um diese anschließend in einer definierten Lage zu fixieren. Bevorzugt ist dabei eine lösbare Schraubverbindung vorgesehen. Alternativ kann vor Ort auch eine Schweißung vorgenommen werden.

Nach einer weiteren bevorzugten Ausgestaltung der Erfindung ist vorgesehen, dass die Stützeinrichtung aus mehreren Trägern besteht, die wenigstens zwei miteinander gekoppelte Teilrahmen bilden, wobei ein Träger des ersten Teilrahmens durch den Querträger des Tragrahmens gebildet ist und zumindest zwei weitere Träger den ersten Teilrahmen der Stützeinrichtung bilden und dass ein Trägerabschnitt oder ein Träger des ersten Teilrahmens gleichzeitig einen Trägerabschnitt oder einen Träger des zumindest einen weiteren Teilrahmens bilden, der aus zumindest zwei weiteren Trägern ausgebildet ist. Diese konstruktive Ausgestaltung weist den Vorteil auf, dass einzelne Träger oder Trägerabschnitte sowohl Träger des ersten Teilrahmens als auch Träger von zumindest einem weiteren Teilrahmen bilden, so dass diese Träger eine Doppelfunktion aufweisen und zur Bildung von zwei benachbarten und miteinander verbundenen Teilrahmen dienen. Dadurch kann eine Materialeinsparung erzielt werden. Gleichzeitig wird durch diese Ausgestaltung der Stützeinrichtung durch zumindest zwei Teilrahmen, die über zumindest einen gemeinsamen Träger zueinander gekoppelt sind, der Vorteil erzielt, dass eine steife Ausgestaltung zwischen zwei lastabtragenden, insbesondere vertikalen Trägern vorgesehen ist, welche vorzugsweise jeweils an einem Ende der Querträger angreifen und an dem zumindest einem gegenüberliegenden Ende sich auf dem zumindest einen Auflager abstützen.

Nach einer bevorzugten Ausgestaltung der Stützeinrichtung ist vorgesehen, dass die zumindest zwei miteinander gekoppelten Teilrahmen, welche die Stützeinrichtung bilden, dreieckförmig ausgebildet sind. Dadurch kann mit einem geringen Materialaufwand eine hohe Steifigkeit erzielt werden. Dabei ist bevorzugt vorgesehen, dass die Stützeinrichtung zwei vertikale Träger umfasst und jeweils einen Träger der zumindest zwei miteinander gekoppelten dreieckförmigen Teilrahmen bildet, wobei insbesondere jeder Träger einen Lastabtragspunkt aufweist und diese beiden Lastabtragspunkte auf einem gemeinsamen Auflager angeordnet und befestigt sind. Des Weiteren kann bei der Ausgestaltung von zwei zueinander benachbarten Auflagern und jeweils einem Lastabtragspunkt des Trägers ein Montageelement vorgesehen sein, welches an den beiden benachbarten Auflagern befestigbar ist. Ebenso kann vorgesehen sein, dass die Träger zwei oder mehrere Lastabtragspunkte aufweisen, wobei zumindest jeweils ein Lastabtragspunkt der beiden Träger auf einem gemeinsamen Auflager angeordnet ist. Bevorzugt können auch mehrere Lastabtragspunkte eines Trägers an dem Montageelement angeordnet sein, so dass dieses Montageelement an einem oder beispielsweise zwei oder mehreren eng zueinander benachbarten Auflagern befestigbar ist.

Eine weitere bevorzugte Ausgestaltung der Erfindung sieht vor, dass die Träger der Stützeinrichtung durch eine Schweißverbindung miteinander verbindbar sind. Dadurch kann eine kostengünstige und steife Herstellung erzielt werden. Bevorzugt werden die einzelnen Träger auf einer Schweißvorrichtung zueinander positioniert und anschließend in jeweiligen Knotenpunkte miteinander verschweißt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer Vorrichtung zur Aufständerung von Solarmodulen,
- Figur 2: eine schematische Seitenansicht einer Stützeinrichtung mit Auflager als Teil der Vorrichtung zur Aufständerung von Solarmodulen gemäß Figur 1,
- Figur 3: eine perspektivische Ansicht eines Knotenpunktes der Stützeinrichtung mit einem Montageelement zur Aufnahme eines Längsträgers und
- Figur 4: eine perspektivische Teilansicht einer erfindungsgemäßen Vorrichtung mit beispielhaft daran angeordneten Solarmodulen.

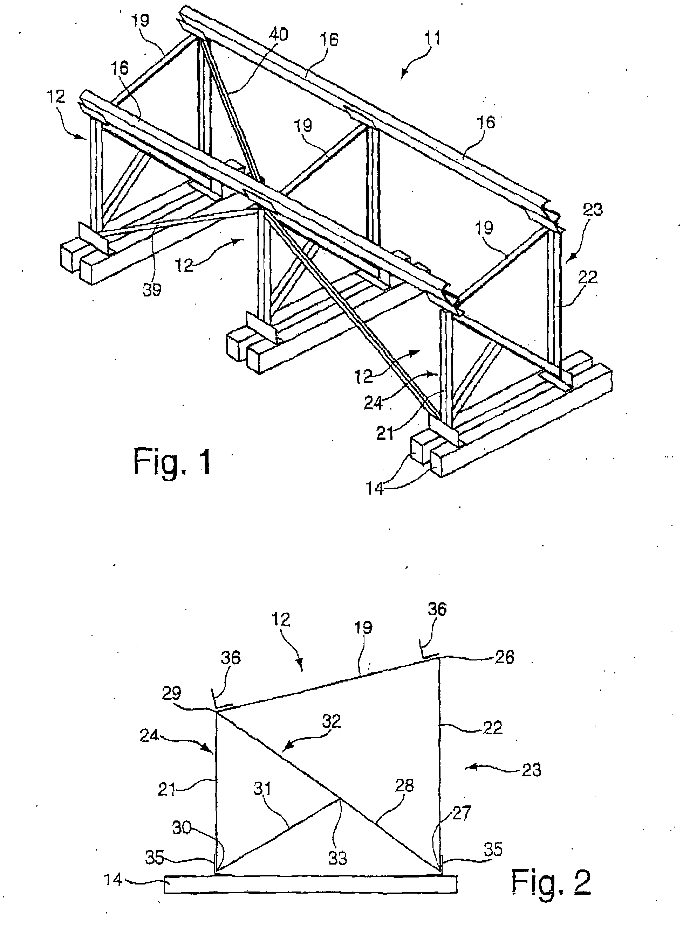

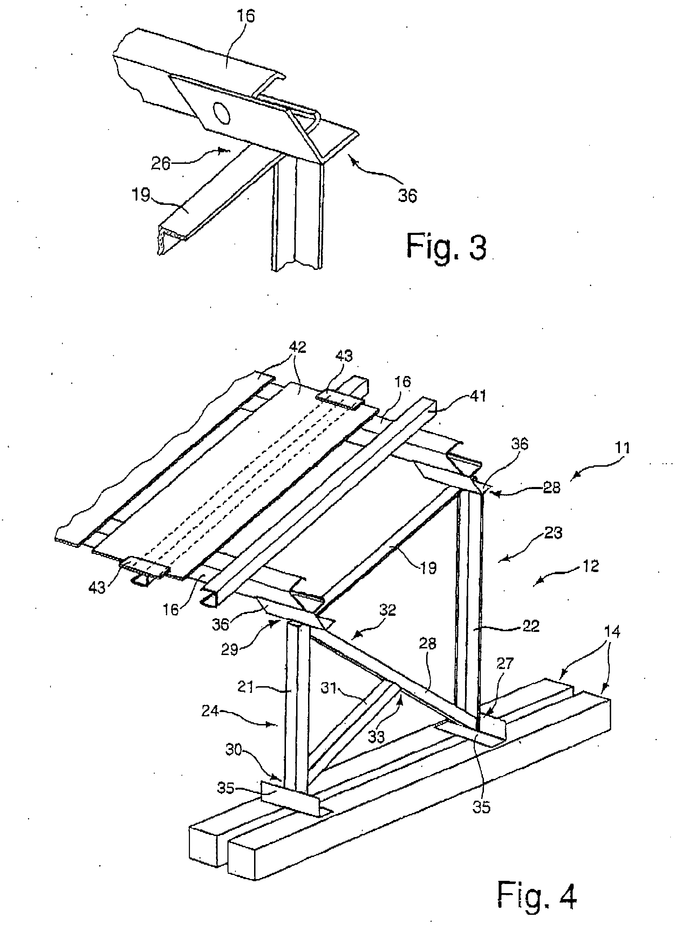

In Figur 1 ist perspektivisch eine erfindungsgemäße Vorrichtung 11 zur Aufständerung von Solarmodulen dargestellt. Solche Vorrichtungen 11 werden auch als Unterkonstruktion für Solarfreianlageflächen bezeichnet. Diese Vorrichtung 11 umfasst eine Stützeinrichtung 12, welche sich einerseits auf zumindest einem Auflager 14 abstützt und gegenüberliegend mit Abstand zum Untergrund Längsträger 16 aufnimmt, die, wie in Figur 4 näher erläutert werden wird, zur Montage von Solarmodulen 47 vorgesehen sind.

Die Stützeinrichtung 12 umfasst einen Querträger 19, der von zwei vorzugsweise vertikal ausgerichteten Trägern 21, 22 aufgenommen ist. Diese vorzugsweise vertikal ausgebildeten Träger 21, 22 sind in deren Länge unterschiedlich ausgebildet, so dass der Querträger 19 gegenüber einer Horizontalen geneigt ausgerichtet ist, um eine entsprechend dem Sonnenstand des jeweiligen Aufstellungsortes der Vorrichtung 11 spezifische Neigung einzustellen. Der Querträger 19 der ersten Stützeinrichtung 12 und der Querträger 19 der benachbarten Stützeinrichtung 12 sowie die jeweils daran angreifenden Längsträger 16 bilden einen Tragrahmen 32, der eine erste Grundsteifigkeit zur Aufnahme von Solarmodulen aufweist und entsprechenden Windlasten Stand hält.

Die Stützeinrichtung 12 kann gemäß einer nicht dargestellten einfachen Ausführungsform dadurch ausgebildet werden, dass beispielsweise zwei vertikal ausgerichtete Träger 21, 22 an dem Querträger 19 angreifen, die durch einen oder mehrere Versteifungsträger zueinander beabstandet angeordnet sind. Ebenso können die Träger 21, 22 auch eine entsprechende Neigung zueinander haben, so dass zwischen den geneigten Trägern 21, 22 und dem Querträger 19 oder nur zwischen den Trägern 21 ein oder mehrere Versteifungselemente angeordnet sind.

Die Stützeinrichtung 12 umfasst jedoch bevorzugt zumindest einen ersten Teilrahmen 23 und einen daran gekoppelten zweiten Teilrahmen 24, deren Konstruktion anhand von Figur 2 näher erläutert wird.

Der vertikale Träger 22 greift an einem oberen Ende des Querträgers 19 an und bildet dadurch einen ersten Knotenpunkt 26 oder Verbindungspunkt. Am gegenüberliegenden Ende des vertikalen Trägers 22 ist im Ausführungsbeispiel ein zweiter Knotenpunkt 27 ausgebildet, an dem ein diagonal verlaufender Träger 28 befestigt ist. Dieser diagonal verlaufende Träger 28 kann am unteren Ende des vertikalen Trägers 22 oder mit Abstand hierzu gegenüber dem Auflager 14 vorgesehen sein. Am oberen Ende des diagonalen Trägers 28 greift dieser an dem Querträger 19 an und bildet einen dritten Knotenpunkt 29. Durch den Querträger 19, den vertikalen Träger 22 und den diagonal verlaufenden Träger 28 ist ein geschlossener Teilrahmen 23 gebildet, dessen eingeschlossener Winkel zwischen zwei Schenkeln jeweils bevorzugt in einem Bereich zwischen 30° und 75° liegt. Dadurch kann ein annähernd gleichseitiges Dreieck als Teilrahmen 23 geschaffen werden.

Der zweite oder weitere Teilrahmen 24 weist bevorzugt ebenfalls zwischen den einzelnen Schenkeln bzw. Trägern einen Winkel zwischen 30° und 75° auf, so dass auch für diesen dreieckförmigen Teilrahmen 24 eine annähernd gleichseitige Geometrie ermöglicht wird.

Der zweite Teilrahmen 24 der Stützeinrichtung 12 besteht aus einem vertikalen Träger 21, der mit dem diagonal verlaufenden Träger 28 in Verbindung steht. Bevorzugt greift dieser an dem Querträger 19 an, so dass diese drei Träger 19, 21 und 28 im dritten Knotenpunkt 29 zueinander befestigt sind. Am gegenüberliegenden Ende des vertikalen Trägers 22 ist in einem vierten Knotenpunkt 30 ein diagonal verlaufender Träger 31 befestigt, der sich wiederum am diagonal verlaufenden Träger 28 abstützt und im Abstützpunkt einen fünften Knotenpunkt 33 bildet. Der diagonal verlaufende Träger 31 kann, wie im Ausführungsbeispiel dargestellt ist, am unteren Ende des vertikalen Trägers 21 und somit unmittelbar benachbart zum Auflager 14 oder dem gegenüber nach oben versetzt angreifen. Durch einen Trägerabschnitt 32 des Trägers 28, den Träger 21 und den diagonal verlaufenden Träger 31 wird der zweite Teilrahmen 24 gebildet.

Am jeweiligen unteren Ende des Trägers 21, 22 ist ein Montageelement 35 vorgesehen, welches beispielsweise als gleichschenkliger Montagewinkel ausgebildet ist. Diese gleichschenkligen Montagewinkel eignen sich in einfacher Weise zur lösbaren Befestigung an dem Auflager 14.

Das Auflager 14 ist bevorzugt als Schienenschwelle vorgesehen, welche aus Holz oder Beton besteht. Im Ausführungsbeispiel gemäß Figur 1 sind beispielsweise zwei zueinander benachbart angeordnete Schienenschwellen als Auflager 14 vorgesehen, wobei jeweils ein Montageelement 35 an einem Lastabtragspunkt des vertikalen Trägers 21, 22 angreift und die Last beispielsweise über zwei benachbart zueinander angeordnete Schienenschwellen als ein Auflager 14 in den Untergrund überleitet. Diese Auflager 14 können lediglich auf einem Untergrund aufgelegt sein oder auch zumindest teilweise in den Untergrund eingelassen werden. Es genügt, dass vor dem Auslegen und Ausrichten der Auflager eine Rohplanie des Untergrunds angelegt wird. Dadurch kann des Weiteren die Aufstellung dieser Aufständerung für Solarmodule vereinfacht, beschleunigt und In den Kosten reduziert werden.

Alternativ kann an Stelle der Ausgestaltung des zumindest einen Auflagers 14 als Schienenschwelle vorgesehen sein, dass Streifenfundamente auf dem Untergrund hergestellt werden oder in den Untergrund zumindest teilweise gelassen sind. Die Anordnung und Befestigung sowie der Lastabtrag erfolgen analog im Ausführungsbeispiel gemäß den Figuren 1, 2 und 4.

Alternativ kann des Weiteren an Stelle der zwei Schienenschwellen nur eine Schienenschwelle als Auflager 14 zur Aufnahme von jeweils einer Stützeinrichtung 12 vorgesehen sein. Ebenso können auch mehr als zwei Schienenschwellen als Auflager 14 einander zugeordnet sein. Dies ist abhängig von den aufzunehmenden Traglasten.

Der Einsatz von Schienenschwellen als Auflager 14 weist den Vorteil auf, dass diese bereits lösbare Befestigungselemente, insbesondere Schraub-Klemm-Platten aufweisen, so dass nach der Positionierung des Montageelementes, insbesondere des Montagewinkels, auf dem zumindest einen Auflager 14 eine einfache Klemmung und Befestigung der Montageplatte zum Auflager 14 erfolgen kann. In einer einfachen Ausgestaltung der Stützeinrichtung 12 ist vorgesehen, dass der Träger 21, 22 einen einzigen Lastabtragspunkt am Ende des Trägers 21, 22 aufweist, an welchem das Montagelement 35 angreift. Dieses Montageelement 35, welches als Montagewinkel bevorzugt ausgebildet ist, ist rechtwinklig in seiner Längserstreckung zum Träger 21, 22 ausgerichtet. Durch die beispielhafte Anordnung von zwei benachbarten Schienenschwellen als Auflager 14 wird eine vergrößerte Auflagefläche für die Stützeinrichtung 12 geschaffen. Gleichzeitig kann ein sicherer Stand bei der Vormontage der Stützeinrichtung 12 bis zu deren Verbindung mit den Längsstreben 16 erzielt werden.

Die Stützeinrichtung 12 ist aus profilierten Trägern 19, 22, 21, 28, 31 gebildet, die beispielsweise einen L-förmigen, U-förmigen oder T-förmigen Querschnitt aufweisen. Dies ermöglicht, dass diese profilierten Träger 19, 21, 22, 28, 31 bereits in sich eine erhöhte Steifigkeit aufweisen. Des Weiteren ist bevorzugt vorgesehen, dass die jeweiligen Träger 19, 21, 22, 28, 31 in den Knotenpunkten 26, 27, 29, 30, 31 durch eine Schweißverbindung zueinander befestigt sind, so dass die Stützeinrichtung 12 als ein vorgefertigtes Montagemodul vor Ort bereitgestellt werden.

Am ersten und dritten Knotenpunkt 26, 29 ist bevorzugt ein weiteres Montageelement 36 vorgesehen, welches vorzugsweise als L-förmiger Winkel ausgebildet ist, wie dies in Figur 3 näher dargestellt wird. Diese L-förmigen Montageelemente 36 sind dabei derart ausgerichtet, dass nach dem Auflegen der Längsträger 16 aufgrund der Neigung der Querträger 19 eine selbsthaltende Positionierung der Längsträger 16 in den Montageelementen 36 ermöglicht ist. Die Verbindung der Längsträger 16 zu den Montageelementen 35 erfolgt bevorzugt über eine Schraubverbindung. Alternativ kann auch eine Schweißverbindung vor Ort vorgenommen werden. Nach dem Fixieren der Längsträger 16 zu den Montageelementen 36 bzw. zur Stützeinrichtung 12 bilden diese Längsträger 16 mit den Querträgern 19 einen geschlossenen Tragrahmen 37. Die Längsträger 16 weisen bevorzugt ein C-förmiges Profil auf. Alternativ können auch weitere Profilgeometrien vorgesehen sein, die eine einfache Befestigung von Montageprofilen und von anbringbaren Solarmodulen ermöglichen.

In einigen Anwendungsfällen genügt die Verbindung der benachbarten Stützeinrichtungen 12 durch jeweils einen oberen und unteren Längsträger 16. Sofern eine höhere Steifigkeit und Lastaufnahme erforderlich ist, können beispielsweise zwischen zwei benachbarten Stützeinrichtungen 12 Versteifungsstreben 39, 40 vorgesehen sein. In Figur 1 sind beispielsweise zwei Versteifungsstreben 39, 40 dargestellt. Die eine Versteifungsstrebe 39 erstreckt sich vom vierten Knotenpunkt 35 der einen Stützeinrichtung 12 zum dritten Knotenpunkt 29 der gegenüberliegenden Stützeinrichtung 12. Ebenso kann diese Versteifungsstrebe 39 an der gegenüberliegenden Stützeinrichtung 12 am ersten oder auch am zweiten Versteifungspunkt 26, 27 angreifen. Analoges gilt für weitere Versteifungsstreben 40, die an dem ersten Knotenpunkt 26 der einen Stützeinrichtung 12 angreifen. Alternativ könnte die Versteifungsstrebe 40 auch an dem ersten oder vierten Knotenpunkt 26, 30 angreifen und am dritten Knotenpunkt 29 an der benachbarten Stützeinrichtung 12. Grundsätzlich können auch alle Knotenpunkte der einander gegenüberliegenden Stützeinrichtungen 12 mit Versteifungsstreben 39, 40 verbunden werden.

Der Aufbau der erfindungsgemäßen Vorrichtung 11 zur Aufständerung von Solarmodulen wird unter Bezugnahme auf Figur 4 beschrieben:

Nach dem gegebenenfalls erforderlichen Herstellen einer Rohplanie am Aufstellungsort der Vorrichtung 11 werden die Auflager 14 beispielsweise auf dem Untergrund aufgelegt und ausgerichtet. Anschließend wird die Stützeinrichtung 12 auf dem beziehungsweise den beiden paarweise angeordneten Auflagern 14 aufgesetzt und mit diesen fest verbunden. Daran anschließend werden die Längsträger 16 an Montageelementen 36 der jeweils benachbarten Stützeinrichtungen 12 befestigt. Die Länge der Längsträger 16 kann dabei auf den Abstand der beiden benachbarten Stützeinrichtungen 12 angepasst sein. Alternativ kann vorgesehen sein, dass die Längsträger 16 den zweifachen oder mehrfachen Abstand von zwei zueinander beabstandeten Stützeinrichtungen 12 umfasst. Bevorzugt werden die einzelnen Stützeinrichtungen 12 in gleichbleibenden Abständen zueinander aufgebaut, so dass eine rasterförmige Anordnung und ein modularer Aufbau ermöglicht sind.

Im Anschluss werden auf den Tragrahmen 37 Montageprofile 41 über Klemm- oder Schraubverbindungen zu den vorzugsweise C-förmig ausgebildeten Längsträgern 16 fixiert. Die Montageprofile 41 umfassen ebenfalls bevorzugt ein C-förmiges Profil. Zur einfachen Anordnung werden diese parallel zur Querstrebe 19 ausgerichtet und in einem vorbestimmten Rastermaß beabstandet zueinander an den Längsträgern fixiert. Dieses Rastermaß steht in Abhängigkeit der Breite von den aufzunehmenden Solarmodulen 42, die beispielsweise über lösbare Befestigungen 43, insbesondere über Klammern, zu den Montageprofilen 41 fixiert werden. Die nicht näher dargestellten Anschlussleitungen der Solarmodule 42 werden in dem unteren oder oberen Längsträger 16 geschützt verlegt, wobei die Öffnungen der C-profllförmigen Längsträger 16 nach oben weisen. Dadurch ist ein einfaches Einlegen der nicht näher dargestellten Anschlussleitungen ermöglicht. Zum Abfließen von ggf. sich in den Längsträgern 16 ansammelndem Wasser oder Feuchtigkeit sind in regelmäßigen Abständen Entwässerungsbohrungen vorgesehen.

Im Ausführungsbeispiel ist ein Solarmodul 42 vorgesehen, welches sich über die gesamte Länge der Querstrebe 19 beziehungsweise des Montageprofils 41 erstreckt. Ebenso können auch kürzere Solarmodule 42 vorgesehen sein, so dass beispielsweise zwei oder mehrere übereinander liegende Reihen von Solarmodulen durch die Vorrichtung 11 aufgenommen werden.

Die Solarmodule 42 sind bevorzugt als Photovoltaik-Module ausgebildet. Alternativ können auch Heißwasserkollektoren als Solarmodule vorgesehen sein.

Diese erfindungsgemäße Vorrichtung 11 ermöglicht eine schnelle und kostengünstige Montage vor Ort sowie eine steife und kostengünstige Ausgestaltung der Stützeinrichtung zur Aufnahme der Solarmodule.

## Patentansprüche

1. Vorrichtung zur Aufständerung von Solarmodulen (42), welche zumindest zwei Querträger (19) aufweist, die zumindest zwei Längsträger (16) aufnehmen und einen Tragrahmen (37) für das zumindest eine Solarmodul (42) bilden, und mit zumindest einer den Tragrahmen (37) aufnehmenden Stützeinrichtung (12), **dadurch gekennzeichnet, dass** die zumindest eine Stützeinrichtung (12) aus wenigstens einem Träger (21, 22) besteht, die an dem zumindest einen Querträger (19) angreift und dass zumindest ein Lastabtragspunkt des zumindest einen Trägers (21, 22) an einem Auflager (14) befestigt ist.

2. Vorrichtung nach Anspruch 1, **dadurch gekennzeichnet, dass** die zumindest eine Stützeinrichtung (12) aus zumindest zwei Trägern (21, 22) besteht, die an dem zumindest einen Querträger (19) angreifen und dass jeweils zumindest ein Lastabtragspunkt der Träger (21, 22) an zumindest einem gemeinsamen Auflager (14) befestigt ist.

3. Vorrichtung nach Anspruch 1 oder 2, **dadurch gekennzeichnet, dass** die Stützeinrichtung (12) zumindest zwei vertikale Träger (21, 22) aufweist.

4. Vorrichtung nach Anspruch 1, **dadurch gekennzeichnet, dass** das Auflager (14) durch zumindest eine Schienenschwelle ausgebildet ist, welche auf einem Untergrund aufliegt oder in den Untergrund zumindest teilweise eingelassen ist und dass die Schienenschwelle vorzugsweise aus Holz oder Beton besteht.

5. Vorrichtung nach Anspruch 1, **dadurch gekennzeichnet, dass** das Auflager (14) durch zumindest ein Streifenfundament aus Beton ausgebildet ist, welches auf einem Untergrund aufliegt oder in den Untergrund zumindest teilweise eingelassen ist.

6. Vorrichtung nach einem der vorhergehenden Ansprüche, **dadurch gekennzeichnet, dass** das Auflager (14) Befestigungselemente zum lösbaren Verbinden der Schutzeinrichtung (12) aufweist.

7. Vorrichtung nach einem der vorhergehenden Ansprüche, **dadurch gekennzeichnet, dass** an dem jeweiligen Lastabtragspunkt der Träger (21, 22) ein Montageelement (35) vorgesehen ist, welches an dem zumindest ein, vorzugsweise an zwei benachbarten Auflagern (14) befestigbar ist.

8. Vorrichtung nach Anspruch 7, **dadurch gekennzeichnet, dass** das Montageelement (35) als Montageplatte oder Montagewinkel ausgebildet ist.

9. Vorrichtung nach einem der vorhergehenden Ansprüche, **dadurch gekennzeichnet, dass** nach dem Auslegen und Ausrichten der als Schienenschwelle ausgebildeten Auflager (14) oder dem Herstellen der Streifenfundamente als Auflager (14) auf oder in dem Untergrund jeweils eine Stützeinrichtung (12) auf dem zumindest einen Auflager (14) anordenbar ist.

10. Vorrichtung nach einem der vorhergehenden Ansprüche, **dadurch gekennzeichnet, dass** zumindest zwei zueinander benachbarte Stützeinrichtungen (12) durch die Längsträger (16) miteinander verbindbar sind.

11. Vorrichtung nach einem der vorhergehenden Ansprüche, **dadurch gekennzeichnet, dass** am ersten und dritten Knotenpunkt (26, 29) der Stützeinrichtung (12) ein Montageelement (36) vorgesehen ist, an welchem zumindest ein Längsträger (16) aufliegt und vorzugsweise der Längsträger (16) zum Montageelement (35) durch eine Schweißverbindung oder lösbare Verbindung, insbesondere Schraubverbindung, befestigt ist.

12. Vorrichtung nach einem der vorhergehenden Ansprüche, **dadurch gekennzeichnet, dass** die Stützeinrichtung (12) aus mehreren Trägern (19, 21, 22, 28, 31) besteht, die wenigstens zwei miteinander gekoppelte Teilrahmen (23, 24) bilden, wobei ein erster Träger (22) des ersten Teilrahmens (23) durch den Querträger (19) gebildet ist und mit zumindest zwei weiteren Trägern (22, 28) den ersten Teilrahmen (23) der Stützeinrichtung (12) bildet und dass zumindest ein Trägerabschnitt (32) oder Träger des ersten Teilrahmens (23) gleichzeitig einen Trägerabschnitt oder einen Träger (28) des zumindest einen weiteren Teilrahmens (24) bildet, der aus zumindest zwei weiteren Trägern (21, 31) ausgebildet ist.

13. Vorrichtung nach Anspruch 12, **dadurch gekennzeichnet, dass** die Teilrahmen (23, 24) dreieckförmig ausgebildet sind.

14. Vorrichtung nach einem der vorhergehenden Ansprüche, **dadurch gekennzeichnet, dass** zumindest die Träger (19, 21, 22, 28, 31) der Stützeinrichtung (12) durch eine Schweißverbindung zueinander befestigt sind.
